# EUROPÄISCHE PATENTSCHRIFT

(11) **EP 1 125 819 B1**
(45) Veröffentlichungstag und Bekanntmachung des Hinweises auf die Patenterteilung: **04.12.2002**
(21) Anmeldenummer: 01103097.0
(22) Anmeldetag: 09.02.2001
(51) Int. Cl.: B62B 5/06, B62B 3/06

(54) **Deichselgelenktes Flurförderzeug**
Hand-guided fork lift truck
Chariot de manutention guidé par timon

(30) Priorität: 14.02.2000 DE 20002580 U
(43) Veröffentlichungstag der Anmeldung: 22.08.2001
(73) Patentinhaber: Still & Saxby S.à.r.l., 77107 Meaux-Cedex (FR)
(72) Erfinder: Gallet, Jean-Paul, 60660 Cires les Mello (FR); Antunes Ferreira, Paulo, 60160 Montataire (FR)
(74) Vertreter: Kasseckert, Rainer

(56) Entgegenhaltungen:
- DE-C- 19 612 603
- DE-U- 29 706 139
- GB-A- 1 538 741

## Beschreibung

Die Erfindung betrifft ein Flurförderzeug mit einer um eine horizontale Achse schwenkbaren Deichsel und einem Fahrantriebsmotor, der durch eine Bedienperson mittels eines Fahrantriebsschalters in Abhängigkeit von der Schwenkposition der Deichsel und der Schaltstellung eines Sonderfahrschalters steuerbar ist, wobei bei in einen Normalfahrbereich geschwenkter Deichsel der Fahrantriebsmotor unabhängig von der Schaltstellung des Sonderfahrschalters durch Betätigen des Fahrantriebsschalters ansteuerbar ist, und wobei bei in einen Sonderfahrbereich geschwenkter Deichsel der Fahrantriebsmotor nur bei gleichzeitig betätigtem Sonderfahrschalter durch Betätigen des Fahrantriebsschalters ansteuerbar ist.

Flurförderzeuge der genannten Art sind häufig als elektrisch angetriebene Niederhubwagen oder Hochhubwagen ausgeführt, die im Mitgängerbetrieb betrieben werden. Ein Antriebsrad des Flurförderzeugs ist dabei direkt oder indirekt mit der Deichsel verbunden, so daß das Flurförderzeug durch Drehen der Deichsel um eine vertikale Achse lenkbar ist.

Zum Betätigen der verschiedenen Funktionen des Flurförderzeugs, insbesondere des Fahrantriebs, wird die Deichsel, ausgehend von einer zumindest annähernd senkrechten Außerbetriebsstellung, nach unten geschwenkt.

Bei Flurförderzeugen des Standes der Technik sind die meist im Bereich eines Deichselkopfes angeordneten Fahrantriebsschalter in der Regel nur dann wirksam, wenn die Deichsel in den Normalfahrbereich geschwenkt ist. Wenn sich die Deichsel oberhalb oder unterhalb dieses Normalfahrbereichs befindet, kann hierbei der Fahrantriebsmotor nicht betrieben werden. Beispielsweise aus der DE 196 12 603 C1 ist jedoch ein Flurförderzeug bekannt, bei dem bei einer außerhalb des Normalfahrbereichs befindlichen Deichsel der Fahrantriebsmotor ansteuerbar ist, wenn ein Sonderfahrschalter betätigt wird. Bei Betätigung des Sonderfahrschalters wird gleichzeitig die Maximalgeschwindigkeit des Flurförderzeugs reduziert.

Durch das Reduzieren der Maximalgeschwindigkeit soll ein Einklemmen der Bedienperson zwischen dem Flurförderzeug und einem hinter der Bedienperson befindliche Hindernis verhindert werden. In der Praxis besteht jedoch dennoch die Gefahr, daß das Flurförderzeug insbesondere bei engen Platzverhältnissen nach einer Fehlbedienung in Richtung der Bedienperson beschleunigt und die Bedienperson dabei trotz der verminderten Maximalgeschwindigkeit anfährt oder einklemmt.

Der vorliegenden Erfindung liegt daher die Aufgabe zugrunde, ein Flurförderzeug zur Verfügung zu stellen, bei dem ein Anfahren oder Einklemmen der Bedienperson auch nach einer Fehlbedienung verhindert ist.

Diese Aufgabe wird erfindungsgemäß dadurch gelöst, daß bei betätigtem Sonderfahrschalter, zumindest bei in den Sonderfahrbereich geschwenkter Deichsel, die Maximalbeschleunigung des Flurförderzeugs auf einen Wert begrenzt ist, der geringer ist, als die Maximalbeschleunigung des Flurförderzeugs bei nicht betätigtem Sonderfahrschalter. Durch das Begrenzen der Maximalbeschleunigung ist ein sanftes Anfahren des Flurförderzeugs sichergestellt. Die Bedienperson kann auch nach einer Fehlbedienung nicht durch eine schnelle, unerwartete Bewegung des Flurförderzeugs überrascht werden. Infolge des langsamen Anfahrens verbleibt der Bedienperson in jeder Betriebssituation eine ausreichend lange Reaktionszeit.

Gemäß einer bevorzugten Ausführungsform der Erfindung ist die Maximalbeschleunigung bei betätigtem Sonderfahrschalter ausschließlich bei in den Sonderfahrbereich geschwenkter Deichsel verringert. Wenn sich die Deichsel im Normalfahrbereich befindet, hat der Sonderfahrschalter somit keinen Einfluß auf das Beschleunigungsverhalten des Flurförderzeugs.

Eine andere mögliche Ausführungsform besteht darin, daß die Maximalbeschleunigung bei betätigtem Sonderfahrschalter bei in den Sonderfahrbereich und bei in den Normalfahrbereich geschwenkter Deichsel verringert ist. Hierbei ist bei betätigtem Sonderfahrschalter, unabhängig von der Stellung der Deichsel, ein langsames Beschleunigen vorgesehen.

Zweckmäßigerweise ist eine Steuereinheit, vorzugsweise eine Impulssteuereinheit, vorgesehen, die eingangsseitig mit dem Fahrantriebsschalter, dem Sonderfahrschalter und einem die Schwenkposition der Deichsel erfassenden Signalgeber verbunden ist und die ausgangsseitig mit dem Fahrantriebsmotor verbunden ist. Mit der Steuereinheit, die den Fahrantriebsmotor mit elektrischer Energie versorgt, wird auch das Drehmoment und die Drehrichtung des Fahrantriebsmotors gesteuert. Hierbei wird der Fahrantriebsmotor aufgrund der mit dem Fahrantriebsschalter, dem Sonderfahrschalter und dem Signalgeber für die Deichselstellung erzeugten Signale angesteuert, wobei noch weitere Steuer- oder Regelgrößen berücksichtigt werden können.

Eine vorteilhafte Weiterbildung der Erfindung liegt vor, wenn die Maximalbeschleunigung des Flurförderzeugs mittels der Steuereinheit durch Begrenzen des dem Fahrantriebsmotor maximal zugeführten Stroms eingestellt wird. Das mit dem Antriebsmotor erzeugbare Drehmoment und damit die Beschleunigung des Flurförderzeugs hängen direkt von dem Stromfluß durch den Antriebsmotor ab.

Weiterhin ist es zweckmäßig, wenn die Maximalgeschwindigkeit des Flurförderzeugs bei betätigtem Sonderfahrschalter den selben Wert aufweist, wie bei nicht betätigtem Sonderfahrschalter. Der Sonderfahrschalter nimmt somit ausschließlich auf das Beschleunigungsverhalten des Flurförderzeugs Einfluß, nicht jedoch auf die maximal erreichbare Endgeschwindigkeit. Es steht daher, wenn der Sonderfahrschalter betätigt ist, auch bei im Sonderfahrbereich befindlicher Deichsel die volle Fahrgeschwindigkeit zur Verfügung. Längere Fahrstrecken lassen sich dabei auch bei senkrechter oder waagrechter Deichsel mit der üblichen Geschwindigkeit zurücklegen.

Weitere Vorteile und Einzelheiten der Erfindung werden anhand des in den schematischen Figuren dargestellten Ausführungsbeispiels näher erläutert. Dabei zeigt
- Figur 1: ein gattungsgemäßes Flurförderzeug,
- Figur 2: eine erfindungsgemäße Deichselanordnung.

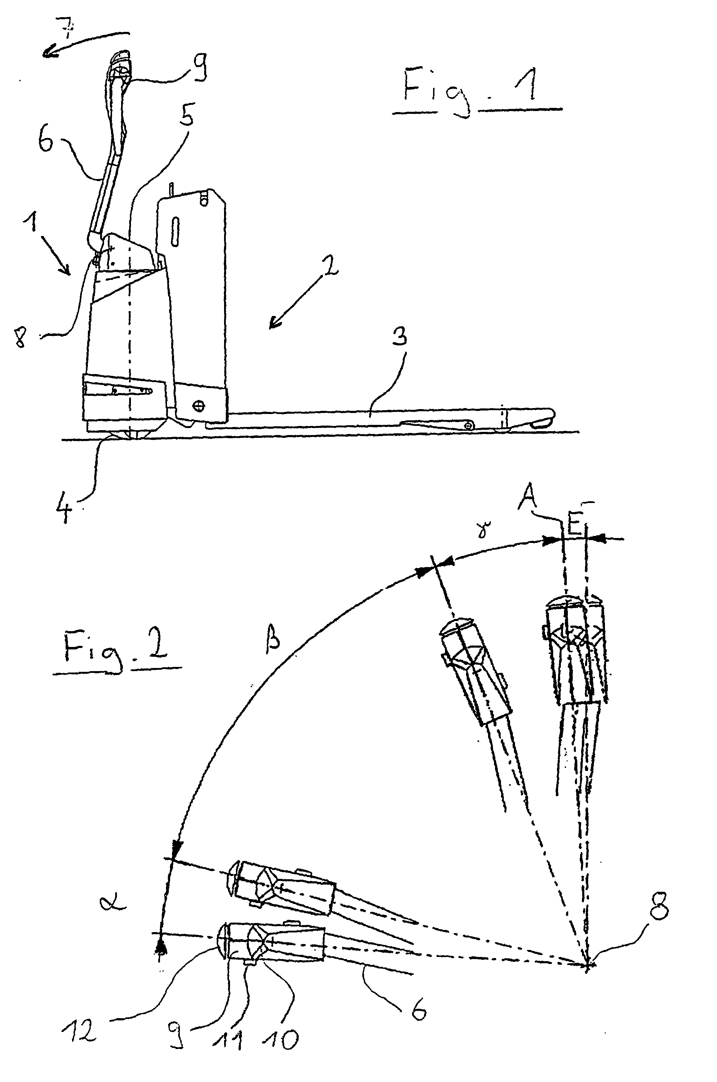

Figur 1 zeigt als gattungsgemäßes Flurförderzeug einen Niederhubwagen. Der Hubwagen weist einen Antriebsteil 1 und einen mittels einer Hubvorrichtung anhebbaren Lastteil 2 auf. Mit einer zum Lastteil 2 gehörenden Gabel 3 können Lasten unterschiedlicher Art, z.B. Paletten oder Container, aufgenommen und angehoben werden. Im Bereich des Antriebsteils 1 befindet sich ein um die Lenkachse 5 lenkbares Antriebsrad 4. Die Lenkbewegung des Antriebsrads 4 ist an eine Drehbewegung einer Deichsel 6 um die Lenkachse 5 gekoppelt. Die Deichsel 6 ist in ihrer Außerbetriebsstellung abgebildet und kann um die horizontale Achse 8 in Richtung 7 in eine Betriebsstellung geschwenkt werden. An dem in der Abbildung oberen Ende der Deichsel 6 befindet sich der Deichselkopf 9.

In Figur 2 ist eine erfindungsgemäße Deichselanordnung in verschiedenen Schwenkpositionen um die horizontale Achse 8 dargestellt. Der Deichselkopf 9 weist einen Fahrantriebsschalter 10 sowie einen Sonderfahrschalter 11 auf. Mit dem Sonderfahrschalter kann wahlweise ein Sonderfahrmodus oder ein Normalfahrmodus des Flurförderzeugs eingeschaltet werden. Ein Bauchschalter 12 verhindert ein Einklemmen der Bedienperson zwischen einer im wesentlichen waagrecht stehenden Deichsel 6 und beispielsweise einer Wand. Sobald der Bauchschalter 12 in Richtung des Deichselkopfes 9 bewegt wird, wird das Flurförderzeug mittels des Fahrantriebsmotors in Richtung von der Bedienperson weg bewegt In einer besonderen Ausführung des Flurförderzeugs bewegt sich das Flurförderzeug auch dann automatisch von der Bedienperson weg, wenn die Deichsel 6 entgegen einer Federkraft in ihre vertikale Endstellung E gedrückt wird.

Wenn der Sonderfahrschalter 11 nicht betätigt ist, befindet sich das Flurförderzeug in einem Normalfahrmodus. Dies bedeutet, daß der Fahrantriebsmotor bei entsprechender Betätigung des Fahrantriebsschalters 10 nur dann betrieben werden, wenn die Deichsel sich im Normalfahrbereich β befindet. Wenn sich die Deichsel in einem der Sonderfahrbereiche α oder γ befindet, ist bei nicht betätigtem Sonderfahrschalter 11 die Bremse des Flurförderzeugs automatisch betätigt, wobei der Fahrantriebsmotor nicht betrieben werden kann. Dieser Schaltmodus entspricht der bei Standard-Flurförderzeugen ohne Sonderfahrschalter 11 üblichen Anordnung.

Wenn das Flurförderzeug unter engen Raumverhältnissen betrieben werden soll, kann der Sonderfahrschalter 11 betätigt werden. Hierdurch wird ein Fahrbetrieb bei im Sonderfahrbereich α oder γ befindlicher Deichsel 6 ermöglicht, wobei erfindungsgemäß die maximale Beschleunigung des Flurförderzeugs begrenzt wird. Es kann hiermit ein ruckartiges Beschleunigen des Flurförderzeugs, insbesondere während des Anfahrens, verhindert werden. In dem vorliegenden Ausführungsbeispiel hat das Betätigen des Sonderfahrschalters keinen Einfluß auf das Beschleunigungsverhalten, wenn sich die Deichsel 6 im Normalfahrbereich β befindet. Möglich wäre aber auch eine Ausführungsform, bei der durch Betätigen des Sonderfahrschalters 11 die maximale Beschleunigung unabhängig von der Deichselstellung für alle Bereiche α, β und γ reduziert wird.

Wenn der Fahrantriebsschalter ausreichend lange betätigt wird, beschleunigt das Flurförderzeug auch im Sonderfahrmodus (Sonderfahrschalter 11 gedrückt, Deichsel im Sonderfahrbereich α oder γ, reduzierte Maximalbeschleunigung) bis zur vorgegebenen Maximalgeschwindigkeit. Die im Sonderfahrmodus eingestellte Maximalgeschwindigkeit ist identisch zur Maximalgeschwindigkeit im Normalfahrmodus.

## Patentansprüche

1. Flurförderzeug mit einer um eine horizontale Achse schwenkbaren Deichsel (6) und einem Fahrantriebsmotor, der durch eine Bedienperson mittels eines Fahrantriebsschalters (10) in Abhängigkeit von der Schwenkposition der Deichsel (6) und der Schaltstellung eines Sonderfahrschalters (11) steuerbar ist, wobei bei in einen Normalfahrbereich (β) geschwenkter Deichsel (6) der Fahrantriebsmotor unabhängig von der Schaltstellung des Sonderfahrschalters (11) durch Betätigen des Fahrantriebsschalters (10) ansteuerbar ist, und wobei bei in einen Sonderfahrbereich (α, γ) geschwenkter Deichsel (6) der Fahrantriebsmotor nur bei gleichzeitig betätigtem Sonderfahrschalter (11) durch Betätigen des Fahrantriebsschalters (10) ansteuerbar ist, **dadurch gekennzeichnet, daß** bei betätigtem Sonderfahrschalter (11), zumindest bei in den Sonderfahrbereich (α, γ) geschwenkter Deichsel (6), die Maximalbeschleunigung des Flurförderzeugs auf einen Wert begrenzt ist, der geringer ist, als die Maximalbeschleunigung des Flurförderzeugs bei nicht betätigtem Sonderfahrschalter (11).

2. Flurförderzeug nach Anspruch 1, **dadurch gekennzeichnet, daß** die Maximalbeschleunigung bei betätigtem Sonderfahrschalter (11) ausschließlich bei in den Sonderfahrbereich (α, γ) geschwenkter Deichsel (6) verringert ist.

3. Flurförderzeug nach Anspruch 1, **dadurch gekennzeichnet, daß** die Maximalbeschleunigung bei betätigtem Sonderfahrschalter (11) bei in den Sonderfahrbereich (α, γ) und bei in den Normalfahrbereich (β) geschwenkter Deichsel (6) verringert ist.

4. Flurförderzeug nach einem der Ansprüche 1 bis 3, **dadurch gekennzeichnet, daß** eine Steuereinheit, vorzugsweise eine Impulssteuereinheit, vorgesehen ist, die eingangsseitig mit dem Fahrantriebsschalter (10), dem Sonderfahrschalter (11) und einem die Schwenkposition der Deichsel (6) erfassenden Signalgeber verbunden ist und die ausgangsseitig mit dem Fahrantriebsmotor verbunden ist.

5. Flurförderzeug nach Anspruch 4, **dadurch gekennzeichnet, daß** die Maximalbeschleunigung des Flurförderzeugs mittels der Steuereinheit durch Begrenzen des dem Fahrantriebsmotor maximal zugeführten Strom eingestellt wird.

6. Flurförderzeug nach einem der Ansprüche 1 bis 5, **dadurch gekennzeichnet, daß** die Maximalgeschwindigkeit des Flurförderzeugs bei betätigtem Sonderfahrschalter (11) den selben Wert aufweist, wie bei nicht betätigtem Sonderfahrschalter (11).

## Claims

1. Industrial truck having a tiller (6) that can be pivoted about a horizontal axis and a traction drive motor, which can be controlled by an operator by means of a traction drive switch (10) on the basis of the pivoting position of the tiller (6) and of the switching position of a special traction switch (11), it being possible, when the tiller (6) is pivoted into a normal traction range (β), for the traction drive motor to be driven by actuating the traction drive switch (10), irrespective of the switching position of the special traction switch (11), and it being possible, when the tiller (6) is pivoted into a special traction range (α,γ), for the traction drive motor to be driven by actuating the traction drive switch (10) only when the special traction switch (11) is actuated at the same time, **characterized in that**, when the special traction switch (11) is actuated, at least when the tiller (6) is pivoted into the special traction range (α,γ), the maximum acceleration of the industrial truck is limited to a value which is lower than the maximum acceleration of the industrial truck when the special traction switch (11) is not actuated.

2. Industrial truck according to Claim 1, **characterized in that** the maximum acceleration when the special traction switch (11) is actuated is reduced only when the tiller (6) is pivoted into the special traction range (α,γ).

3. Industrial truck according to Claim 1, **characterized in that** the maximum acceleration when the special traction switch (11) is actuated is reduced when the tiller (6) is pivoted into the special traction range (α,γ) and into the normal traction range (β).

4. Industrial truck according to one of Claims 1 to 3, **characterized in that** a control unit, preferably a pulse control unit, is provided, which on the input side is connected to the traction drive switch (10), the special traction switch (11) and a signal generator that registers the pivoting position of the tiller (6), and which on the output side is connected to the traction drive motor.

5. Industrial truck according to Claim 4, **characterized in that** the maximum acceleration of the industrial truck is set by means of the control unit by limiting the maximum current supplied to the traction drive motor.

6. Industrial truck according to one of Claims 1 to 5, **characterized in that** the maximum speed of the industrial truck when the special traction switch (11) is actuated has the same value as when the special traction switch (11) is not actuated.

## Revendications

1. Chariot de manutention comprenant un timon (6) pouvant pivoter autour d'un axe horizontal et un moteur d'entraînement de conduite qui peut être commandé par un opérateur au moyen d'un commutateur d'entraînement de conduite (10) en fonction de la position de pivotement du timon (6) et de la position de commutation d'un commutateur de conduite spéciale (11), dans lequel, lorsque le timon (6) est pivoté dans une plage de conduite normale (β), le moteur d'entraînement de conduite peut être commandé indépendamment de la position de commutation du commutateur de conduite spéciale (11) par l'actionnement du commutateur d'entraînement de conduite (10), et dans lequel, lorsque le timon (6) est pivoté dans une plage de conduite spéciale (α, γ), le moteur d'entraînement de conduite ne peut être commandé par l'actionnement du commutateur d'entraînement de conduite (10) que si le commutateur de conduite spéciale (11) est actionné en même temps, **caractérisé en ce que**, lorsque le commutateur de conduite spéciale (11) est actionné, au moins lorsque le timon (6) est pivoté dans la plage de conduite spéciale (α, γ), l'accélération maximale du chariot de manutention est limitée à une valeur qui est inférieure à l'accélération maximale du chariot de manutention lorsque le commutateur de conduite spéciale (11) n'est pas actionné.

2. Chariot de manutention selon la revendication 1, **caractérisé en ce que** l'accélération maximale est réduite lorsque le commutateur de conduite spéciale (11) est actionné exclusivement lorsque le timon (6) est pivoté dans la plage de conduite spéciale (α, γ).

3. Chariot de manutention selon la revendication 1, **caractérisé en ce que** l'accélération maximale est réduite lorsque le commutateur de conduite spéciale (11) est actionné, lorsque le timon (6) est pivoté dans la plage de conduite spéciale (α, γ) et lorsqu'il est pivoté dans la plage de conduite normale (β).

4. Chariot de manutention selon l'une quelconque des revendications 1 à 3, **caractérisé en ce qu'**il est prévu une unité de commande, de préférence une unité de commande par impulsions, qui est connectée du côté de l'entrée au commutateur d'entraînement de conduite (10), au commutateur de conduite spéciale (11) et à un capteur de signal détectant la position de pivotement du timon (6), et qui est connectée, du côté de la sortie, au moteur d'entraînement de conduite.

5. Chariot de manutention selon la revendication 4, **caractérisé en ce que** l'accélération maximale du chariot de manutention est ajustée au moyen de l'unité de commande par la limitation du courant maximal pouvant alimenter le moteur d'entraînement de conduite.

6. Chariot de manutention selon l'une quelconque des revendications 1 à 5, **caractérisé en ce que** la vitesse maximale du chariot de manutention présente la même valeur lorsque le commutateur de conduite spéciale (11) est actionné et lorsque le commutateur de conduite spéciale (11) n'est pas actionné.
